(19) Europäisches Patentamt
European Patent Office
Office européen des brevets

(11) **EP 0 663 632 B1**

(12) **EUROPÄISCHE PATENTSCHRIFT**

(45) Veröffentlichungstag und Bekanntmachung des Hinweises auf die Patenterteilung:
**10.12.1997 Patentblatt 1997/50**

(51) Int Cl.⁶: **G05B 13/04**, C23C 2/06, C23C 2/16, G05D 5/03

(21) Anmeldenummer: **94100589.4**

(22) Anmeldetag: **17.01.1994**

(54) **Verfahren und Vorrichtung zur Führung eines Prozesses**

Method and apparatus for controlling a process

Méthode et dispositif pour la comande d'un processus

(84) Benannte Vertragsstaaten:
**AT BE DE FR GB IT**

(43) Veröffentlichungstag der Anmeldung:
**19.07.1995 Patentblatt 1995/29**

(73) Patentinhaber: **SIEMENS AKTIENGESELLSCHAFT**
**80333 München (DE)**

(72) Erfinder: **Niemann, Martin, Dipl.-Ing.**
**D-91054 Erlangen (DE)**

(56) Entgegenhaltungen:
**EP-A- 0 519 501**     **EP-A- 0 521 749**

- **PROCEEDINGS OF THE 1992 INTERNATIONAL SYMPOSIUM ON INTELLIGENT CONTROL, 11. August 1992, GLASGOW GB Seiten 122 - 127 D. SBARBARO-HOFER, D. NEUMERKEL, K.HUNT 'Neural control of a steel rolling mill'**
- **AUTOMATISIERUNGSTECHNISCHE PRAXIS - ATP, Bd.34, Nr.11, November 1992, MUNCHEN DE Seiten 640 - 645 D. NEUMERKEL, F. LOHNERT 'Anwendungsstand Künstlicher Neuronaler Netze in der Automatisierungstechnik'**
- **MECHATRONICS, Bd.3, Nr.6, Dezember 1993, OXFORD GB Seiten 705 - 725 T.H. LEE, W.K. TAN 'Real-time parallel adaptive neural network control for nonlinear servomechanisms-an approach using direct adaptive techniques'**
- **FUZZY SETS AND SYSTEMS, Bd.56, Nr.3, Juni 1993, AMSTERDAM NL Seiten 273 - 280 M. BALAZINSKI, E. CZOGALA, T. SADOWSKI 'Modelling of neural controllers with application to the control of a machining process'**
- **SECOND IEEE INTERNATIONAL CONFERENCE ON FUZZY SYSTEMS, 28. März 1993, SAN FRANCISCO US Seiten 345 - 350 H. BERSINI, J.-P. NORDVIK, A. BONARINI 'A simple direct adaptive fuzzy controller derived from its neural equivalent'**

# Beschreibung

Die Erfindung betrifft ein Verfahren zur Führung einer Beschichtungsanlage, bei dem eine Ausgangsgröße, die von mehreren, auf die Beschichtungsanlage einwirkenden Einflußgrößen abhängig ist, durch eine über ein Stellglied auf die Beschichtungsanlage einwirkende Stellgröße derart beeinflußt wird, daß sie den Wert einer vorgegebenen Führungsgröße annimmt. Die Erfindung betrifft ferner eine entsprechende Vorrichtung.

Es ist allgemein bekannt, einen solchen Prozeß derart zu führen, daß die Ausgangsgröße des Prozesses, also die Regelgröße, mit einer Führungsgröße verglichen wird und die so erhaltene Regelabweichung einer Regeleinrichtung zugeführt wird, die ausgangsseitig eine Stellgröße erzeugt, mit der der Prozeß über ein Stellglied beeinflußt wird. Neben der Stellgröße wirken auch eine Reihe anderer Einflußgrößen auf den Prozeß, wobei der Zusammenhang zwischen der Stellgröße und den Einflußgrößen einerseits und der Ausgangsgröße des Prozesses andererseits durch Kennlinien dargestellt werden kann, welche durch Messungen der Größen erhalten werden. Diese in der Praxis fast immer nichtlinearen Kennlinien sind jedoch meist nicht genau bekannt und können sich aufgrund von sich ändernden Prozeßbedingungen verändern. Dabei ergibt sich das Problem der Anpassung der Regelung des Prozesses an die sich ändernden Prozeßbedingungen, um zu erreichen, daß die Regeleinrichtung immer im optimalen Arbeitspunkt arbeitet. Aus der EP 0 521 749 ist ein Verfahren zur Führung einer Beschichtungsanlage offenbart, wobei in dieser Anlage mittels eines in einer Recheneinrichtung enthaltenen Modells der Beschichtungsanlage in Abhängigkeit von einem dem Modell eingangsseitig zugeführten Solluftdruck und Einflußgrößen, von denen die Istschichtdicke abhängig ist sowie in Abhängigkeit von veränderbaren Modellparametern ein Modellausgangswert berechnet wird, wobei der Modellausgangswert mit der gemessenen Istwertschichtdicke verglichen und in Abhängigkeit von dem Vergleichsergebnis der Modellparameter im Sinne einer Verringerung der Abweichung zwischen Modellausgangswert und der Istschichtdicke verändert wird. Dabei wird das so an das tatsächliche Prozeßgeschehen adaptierte Modell der Beschichtungsanlage zur Bestimmung des Solldrucks in Abhängigkeit von den Einflußgrößen herangezogen. Diese Vorgehensweise führt jedoch nicht immer zu der geforderten qualitativ hochwertigen Beschichtung.

Der Erfindung liegt daher die Aufgabe zugrunde, die Führung einer Beschichtungsanlage in optimaler Weise an das tatsächliche Prozeßgeschehen anzupassen.

Gemäß der Erfindung wird die Aufgabe durch ein Verfahren gemäß Anspruch 1 bzw. eine Vorrichtung gemäß Anspruch 11 sowie ein Verfahren gemäß Anspruch 2 bzw. eine Vorrichtung gemäß Anspruch 12 gelöst.

Der zu führende Prozeß wird also durch das Modell abgebildet, wobei dieses durch Adaption an das tatsächliche Prozeßgeschehen angepaßt wird. Mit dem adaptierten Modell wird dann aus der Führungsgröße die Stellgröße direkt berechnet, wobei bei hinreichend genauer Abbildung des Prozesses durch das Modell eine Regeleinrichtung überhaupt nicht mehr erforderlich ist. Die Erfindung bietet also die Möglichkeit, eine Beschichtungsanlage mit der Führungsgröße ohne Regelung direkt zu steuern, wodurch die Prozeßführung einfacher und schneller erfolgt, als dies bei einer Regelung der Fall ist.

Entsprechend Anspruch 1 ist vorgesehen, daß zur Bestimmung der Stellgröße (Solluftdruck) die Führungsgröße (Sollschichtdicke) mit dem Modellausgangswert verglichen wird und in Abhängigkeit von dem Vergleichsergebnis ein dem Modell zugeführter Wert für die Stellgröße (Solluftdruck) solange verändert wird, bis der Modellausgangswert der Führungsgröße (Sollschichtdicke) entspricht, und daß der schließlich erhaltene Wert für die Stellgröße (Solluftdruck) dem Stellglied zugeführt wird.

Die Bestimmung der Stellgröße erfolgt gemäß Anspruch 2 in der Weise, daß die Führungsgröße (Sollschichtdicke) und die Einflußgrößen eingangsseitig einem inversen Modell der Beschichtungsanlage zugeführt werden, das ausgangsseitig die Stellgröße (Solluftdruck) erzeugt, wobei in Abhängigkeit von der Adaption des Modells der Beschichtungsanlage auch das inverse Modell an das Prozeßgeschehen angepaßt wird. Das inverse Modell der Beschichtungsanlage erhält im Unterschied zu dem nichtinversen Modell die Stellgröße nicht als Eingangsgröße, sondern berechnet die Stellgröße in umgekehrter Richtung aus den anderen Größen. Dementsprechend läßt sich das inverse Modell direkt aus dem nichtinversen Modell ableiten. Zwar ist der grundsätzliche Einsatz inverser Modelle aus dem Artikel „Anwendungsstand Künstlicher Neuronaler Netze in der Automatisierungstechnik" von Neumerkel und Lohnert, ATP Automatisierungstechnische Praxis 34 (1992) November, No. 11 bekannt, doch erfolgt dieser Einsatz in grundsätzlich unterschiedlicher Weise zu dem Einsatz des inversen Modells gemäß der Erfindung. Während das in dem Artikel „Anwendungsstand Künstlicher Neuronaler Netze in der Automatisierungstechnik" das inverse Modell ein festes Modell ist, wird das inverse Modell gemäß dem erfindungsgemäßen Einsatz an das Prozeßgeschehen adaptiert. Außerdem erfolgt das Trainieren des inversen Modells nicht wie in dem Artikel „Anwendungsstand Künstlicher Neuronaler Netze in der Automatisierungstechnik", sondern in Abhängigkeit von der Adaption des nichtinversen Modells der Beschichtungsanlage. Ein weiterer Unterschied besteht darin, daß das an das tatsächliche Prozeßgeschehen adaptierte Modell der Beschichtungsanlage zur Bestimmung der Stellgröße, in diesem Fall des Solluftdrucks, in Abhängigkeit von der Istschichtdicke, d.h. der Istgröße, herangezogen wird. Ein weiterer Unterschied besteht darin, daß dem inversen Modell gemäß dem Artikel »Anwendungsstand Künstlicher Neuronaler Netze in der Automatisierungstechnik" die Differenz zwischen Soll- und Istwert zugeführt wird. Demgegenüber werden dem inversen Modell gemäß der Erfindung die Sollschichtdicke, also die Sollgröße, sowie Einflußgrößen zugeführt. Auf diese Weise ergibt sich eine von der Regelungsstruktur aus Bild 5 im Artikel ,,Anwendungsstand Künstlicher Neuronaler Netze in der Automatisierungstechnik" verschiedene Struktur des Signalflusses.

Wie bereits erwähnt wurde, ist bei hinreichend genauer Nachbildung des zu führenden Prozesses durch das Modell eine Regeleinrichtung zur Regelung des Prozesses nicht mehr notwendig. Für den Fall, daß dennoch eine Regelung als erforderlich angesehen wird, wird zusätzlich die Regelabweichung zwischen dem Modellausgangswert oder der vorgegebenen Führungsgröße und der gemessenen Ausgangsgröße des Prozesses einer Regeleinrichtung zugeführt, deren Ausgangssignal der mittels des Modells des Prozesses erzeugten Stellgröße aufgeschaltet wird. Die Recheneinrichtung mit dem Modell des Prozesses wirkt dann als Vorsteuerung für die Regeleinrichtung, so daß diese nur noch solche Regelfehler ausregeln muß, die von dem Modell nicht erfaßt werden. Die Regeleinrichtung wird daher nur in geringem Maße beansprucht und kann somit entsprechend einfach ausgebildet sein.

Um zu erreichen, daß die Regeleinrichtung immer im optimalen Arbeitspunkt arbeitet, wird in vorteilhafter Weise die Verstärkung der Regeleinrichtung mittels des von dem Modell des Prozesses gelieferten Modellausgangswertes eingestellt.

Das Modell des Prozesses wird in einem Lernprozeß generiert, wobei zunächst aufgrund von vorhandenem Wissen über den zu führenden Prozeß das Modell gelernt wird. Mit diesem Modell bzw. dem entsprechenden inversen Modell wird dann der Prozeß gesteuert. Anhand der nun anfallenden Meßwerte der Stellgröße, der Einflußgrößen und der Ausgangsgröße des Prozesses läßt sich das Modell verbessern und an das reale Prozeßgeschehen anpassen. Dabei wird vorzugsweise der Modellausgangswert durch eine - vorzugsweise additive - Verknüpfung einer Grundkomponente und einer Korrekturkomponente gebildet, wobei die Grundkomponente von einem Grundmodell des Prozesses erzeugt wird, das aufgrund von vorhandenem Wissen über den Prozeß erstellt worden ist und anhand der gemessenen Ausgangsgröße des Prozesses an das Prozeßgeschehen adaptiert wird, und wobei die Korrekturkomponente von einer Korrektureinrichtung erzeugt wird, die in Abhängigkeit von nach erfolgter Adaption des Grundmodells noch bestehenden Abweichungen zwischen dem Modellausgangswert und der Ausgangsgröße des Prozesses adaptiv an das Prozeßgeschehen angepaßt wird. Aus der Aufteilung des Modells des Prozesses in ein Grundmodell und eine Korrektureinrichtung ergibt sich der Vorteil, daß bereits nach relativ kurzer Lernzeit, nämlich nach erfolgter Adaption des Grundmodells, ein geeignetes Mittel zur Steuerung des Prozesses zur Verfügung steht. Der zu führende Prozeß wird also durch das aus dem vorhandenen Wissen über den Prozeß abgeleitete und an das aktuelle Prozeßgeschehen angepaßte Grundmodell gut nachgebildet, wobei jedoch darüber hinaus verbleibende Modellfehler nicht durch den Versuch einer weiteren adaptiven Anpassung des Modells, sondern durch die parallel zu dem Grundmodell geschaltete Korrektureinrichtung korrigiert werden. Gegenüber einer ausschließlichen Verwendung eines Modells zur Erzeugung des Modellausgangswerts ergibt sich der Vorteil, daß sowohl der Aufbau als auch das Training des Grundmodells und der Korrektureinrichtung einfacher ist, als bei einem einzigen Modell, das dieselben Anforderungen erfüllen soll.

Das Grundmodell des Prozesses wird vorzugsweise in Form eines neuronalen Netzwerkes realisiert, indem zur Erstellung des Grundmodells des Prozesses aufgrund des vorhandenen Wissens über den Prozeß, beispielsweise in Form von Kennlinien, die den Zusammenhang zwischen der Stellgröße, den Einflußgrößen und der Ausgangsgröße des Prozesses beschreiben und durch Messungen dieser Größen ermittelt werden, eine mathematische Funktion erstellt wird, die die Abhängigkeit der Ausgangsgröße des Prozesses von der Stellgröße, den Einflußgrößen und von Funktionsparametern wiedergibt, und indem die so erhaltene Funktion als neuronales Netzwerk realisiert wird, dem eingangsseitig die Stellgröße und die Einflußgrößen zugeführt werden und dessen den Funktionsparametern entsprechende Netzwerkparameter adaptiv an das Prozeßgeschehen angepaßt werden. Hierdurch wird erreicht, daß von vorneherein die Struktur des neuronalen Netzwerkes anhand des vorhandenen Wissens über den zu führenden Prozeß, nämlich die gemessenen Kennlinien und die daraus abgeleitete mathematische Funktion, an den Prozeß angepaßt ist, so daß das neuronale Netzwerk im Vergleich zu einem allgemeinen Netzwerk einfach aufgebaut und über seine Netzwerkparameter entsprechend einfach und schnell an das reale Prozeßgeschehen adaptiert werden kann.

Verbleibende Modell fehler, die daraus resultieren, daß das Grundmodell bzw. das neuronale Netzwerk wegen seines einfachen Aufbaus nur bis zu einer bestimmten Grenze an das Prozeßgeschehen angepaßt werden kann, werden, wie bereits erläutert, durch die Korrektureinrichtung korrigiert. Die Korrektureinrichtung ist in vorteilhafter Weise derart ausgebildet, daß sie für vorgegebene Stützstellen in dem von der Stellgröße und den Einflußgrößen definierten mehrdimensionalen Raum stützstellenbezogene Korrekturwerte bereitstellt, daß die stützstellenbezogenen Korrekturwerte derart aus Abweichungen zwischen dem Modellausgangswert und der zusammen mit zwischen den Stützpunkten liegenden Werten der Stellgröße und der Einflußgrößen gemessenen Ausgangsgröße des Prozesses berechnet wird, daß sich bei Interpolation der stützstellenbezogenen Korrekturwerte die jeweilige gemessene Abweichung wieder ergibt, und daß die Korrekturkomponente durch Interpolation zwischen denjenigen stützstellenbezogenen Korrekturwerten berechnet wird, deren Stützstellen den Werten für die zu der Korrekturkomponente gehörende Stellgröße und die Einflußgrößen benachbart sind. Anhand von gemessenen Modellfehlern werden also zunächst Korrekturwerte nur an einer begrenzten Anzahl von vorgegebenen Stützstellen gelernt, so daß der Aufbau der Korrektureinrichtung entsprechend einfach sein kann und das Lernen der Korrekturwerte an den wenigen Stützstellen einfach und schnell erfolgt. Die Korrekturkomponente wird dann für jede beliebig auftretende Wertekombination der Stellgröße und der Einflußgrößen in einfacher Weise durch Interpolation zwischen den gelernten stützstellenbezogenen Korrekturwerten berechnet.

Dabei erfolgt die Interpolation zur Berechnung der Korrekturkomponente vorzugsweise auf der Grundlage von Fuzzy-Folgerungen, indem jeder Stützstelle eine Zuordnungs- (Membership-)Funktion zugeordnet wird, die an der betreffenden Stützstelle den Wert Eins aufweist und bis zu den nächsten benachbarten Stützstellen auf den Wert Null abfällt, und indem die stützstellenbezogenen Korrekturwerte mit den zugehörigen Zuordnungsfunktionen gewichtet und einander überlagert werden.

Wie auch schon die Grundkomponente, wird auch die Korrekturkomponente bevorzugt in einem die Korrektureinrichtung bildenden neuronalen Netzwerk berechnet.

Das erfindungsgemäße Verfahren findet bei industriellen verfahrenstechnischen Prozessen Anwendung, die aufgrund von vorhandenem, beispielsweise durch Messung von Prozeßgrößen erhaltenen Wissen über den jeweiligen Prozeß durch Modelle beschrieben werden können. In diesem Zusammenhang wird mit dem erfindungsgemäßen Verfahren die Zinkschichtdicke eines ein Bad mit flüssigem Zink durchlaufenden Bandes geregelt, indem aus einer Düse Luft gegen das aus dem Zinkbad austretende Band geblasen wird, wobei die Zinkschichtdicke die Ausgangsgröße des Prozesses ist, der Luftdruck die Stellgröße bildet und die Bandgeschwindigkeit sowie die geometrische Anordnung der Düse in bezug auf das Band die auf den Prozeß einwirkenden Einflußgrößen sind.

Entsprechend den vorstehend angegebenen Ausbildungen des erfindungsgemäßen Verfahrens weist die Vorrichtung zur Führung der Beschichtungsanlage entsprechende, zur Durchführung des erfindungsgemäßen Verfahrens ausgebildete Mittel, d. h. insbesondere eine entsprechend programmierte Recheneinrichtung, auf.

Im folgenden wird die Erfindung unter Bezugnahme auf die Figuren näher erläutert. Dabei zeigen:

FIG 1   das Schema einer Feuerverzinkungsanlage,
FIG 2   das Blockschaltbild einer ersten Ausführungsform der erfindungsgemäßen Vorrichtung,
FIG 3   das Blockschaltbild einer zweiten Ausführungsform der erfindungsgemäßen Vorrichtung,
FIG 4   ein Blockschaltbild der um eine Regeleinrichtung erweiterten erfindungsgemäßen Vorrichtung,
FIG 5   ein Diagramm mit Kennlinien, die die Abhängigkeit der Ausgangsgröße des Prozesses von Einflußgrößen beschreiben,
FIG 6   ein Blockschaltbild eines Modells des Prozesses, bestehend aus einem Grundmodell und einer Korrektureinrichtung,
FIG 7   ein Beispiel für die Ausbildung des Grundmodells als neuronales Netzwerk,
FIG 8   ein Diagramm zur Erläuterung der Erzeugung einer Korrekturkomponente durch die Korrektureinrichtung und
FIG 9   ein Beispiel für die Ausbildung der Korrektureinrichtung als neuronales Netzwerk.

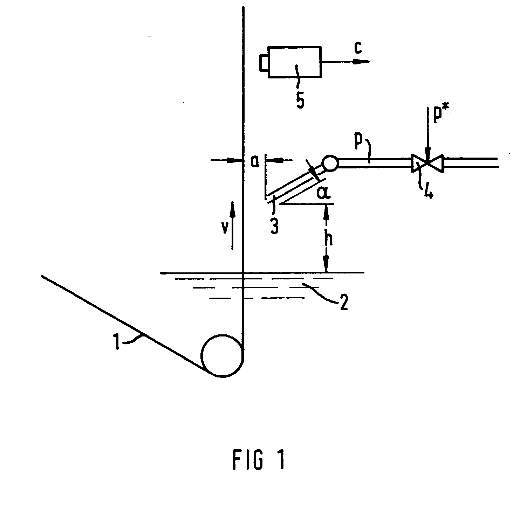

FIG 1 zeigt das Schema einer Feuerverzinkungsanlage, in der ein gewalztes Band 1 mit einer Geschwindigkeit v ein Bad 2 mit flüssigem Zink durchläuft. Nach dem Austritt aus dem Zinkbad 2 bleibt eine noch flüssige Zinkschicht an dem Band 1 haften. Im Abstand a vom Band 1 befindet sich eine Düse 3, aus der mit einem Druck p Luft gegen das Band 1 strömt und so überschüssiges Zink entfernt. Der Luftdruck p wird dabei über ein Stellglied 4, hier ein Ventil, in Abhängigkeit von einer Stellgröße p* eingestellt. Im Verlauf des Bandes 1 ist hinter der Düse 3 ein Heißmeßgerät 5 angeordnet, mit dem die Zinkschichtdicke c auf dem Band 1 gemessen wird.

Haupteinflüsse für die Zinkschichtdicke c sind die Geschwindigkeit v des Bandes 1, der Luftdruck p, der Abstand a zwischen dem Band 1 und der Düse 3, die Höhe h der Düse 3 über dem Zinkbad 2 und der Winkel α zwischen dem Band 1 und der Düse 3.

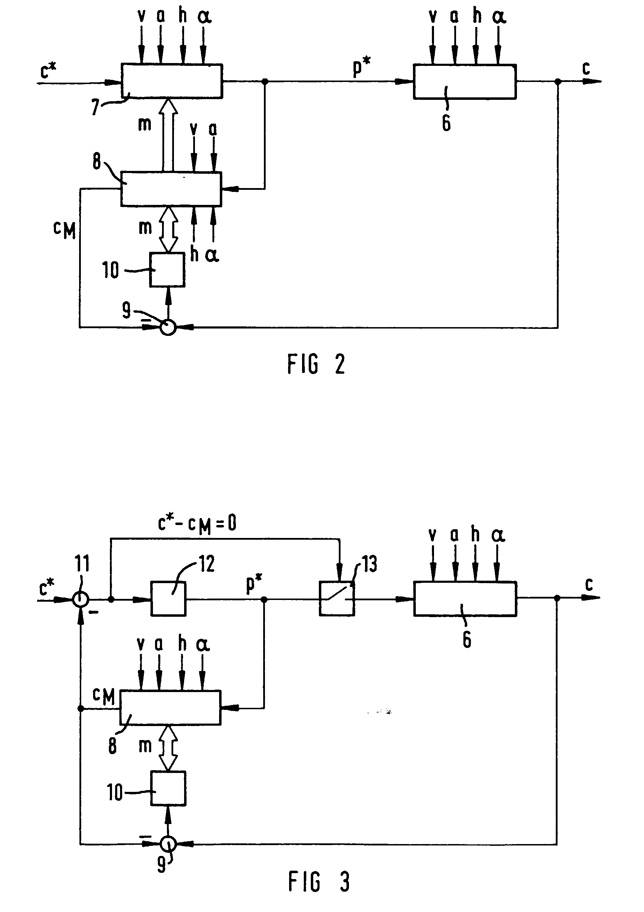

Der in FIG 1 gezeigte technische Prozeß, bei dem sich die Ausgangsgröße des Prozesses, nämlich die Zinkschichtdicke c, in Abhängigkeit von der Stellgröße p* und den übrigen Einflußgrößen v, a, h und α einstellt, ist in dem Blockschaltbild nach FIG 2 in Form eines Funktionsblockes 6 dargestellt. Ziel ist es, die Stellgröße p* so einzustellen, daß die Ausgangsgröße c des Prozesses, also die tatsächliche gemessene Zinkschichtdicke, den Wert einer Führungsgröße c*, hier der Soll-Zinkschichtdicke, annimmt. Die Einstellung der Stellgröße p* erfolgt dabei im Unterschied zu einer herkömmlichen Regelung durch ein inverses Modell 7 des Prozesses 6, das als Eingangsgrößen die Führungsgröße c* und die Einflußgrößen v, a, h und α erhält und aus diesen Größen die Stellgröße p* direkt berechnet. Das inverse Modell 7 ist unmittelbar aus einem Modell 8 des Prozesses 6 abgeleitet, das den Prozeß 6 nachbildet und dementsprechend ebenso wie der Prozeß als Eingangsgrößen die Stellgröße p* und die Einflußgrößen v, a, h und α erhält. Diese Eingangsgrößen werden in dem Modell 8 über änderbare Modellparameter m zu einem Modellausgangswert $c_M$ verknüpft, der umso mehr der realen Ausgangsgröße c des Prozesses 6 entspricht, je genauer der Prozeß 6 durch das Modell 8 nachgebildet wird. Dazu wird das aufgrund von bereits vorhandenem Wissen über den Prozeß 6 voradaptierte Modell 8 nach Inbetriebnahme der gesamten Vorrichtung zur Führung des Prozesses 6 adaptiv an das tatsächliche Prozeßgeschehen angepaßt. Hierzu wird der Modellausgangswert $c_M$ in einer Vergleichseinrichtung 9 mit der gemessenen Ausgangsgröße c des Prozesses 6 verglichen und die Abweichung $c_M$-c einem durch den Schaltungsblock 10 repräsentierten Lernalgorithmus zugeführt, der auf die Modellparameter m in dem Modell 8 zugreift und diese in Abhängigkeit von der ermittelten Abweichung $c_M$-c im Sinne einer Verringerung dieser Abweichung verändert. Gleichzeitig werden auch in dem inversen Modell 7, das im Vergleich zu dem Modell 8 lediglich eine inverse Berechnung durchführt und deswegen direkt aus dem Modell 7 abgeleitet ist und auch dieselben Modellparameter m aufweist, die Modellparameter m verändert, so daß das Modell 8 und das zugehörige inverse Modell 7 beide an das tatsächliche Prozeßgeschehen angepaßt werden.

Bei guter Adaption des Modells 8 an den Prozeß 6 wird von dem inversen Modell 7 die Stellgröße p* in Abhängigkeit von der Führungsgröße c* und den Einflußgrößen v, a, h und $\alpha$ so genau berechnet, daß die Ausgangsgröße c des Prozesses den Wert der Führungsgröße c* annimmt. Dabei erfolgt die Berechnung der Stellgröße p* schneller, als dies bei einer herkömmlichen Regelung, die im übrigen auch ständig an den tatsächlichen Prozeßverlauf angepaßt werden muß, der Fall ist.

FIG 3 zeigt ein alternatives Ausführungsbeispiel für die erfindungsgemäße Vorrichtung zur Führung des Prozesses 6. Dieses Ausführungsbeispiel unterscheidet sich von dem in FIG 2 durch das Fehlen des inversen Modells 7. Stattdessen wird der Modellausgangswert $c_M$ in einer weiteren Vergleichseinrichtung 11 mit der Führungsgröße c* verglichen und das Vergleichsergebnis c*-$c_M$ einer Einrichtung 12 zugeführt, die ausgangsseitig einen Wert für die Stellgröße p* erzeugt und diesen Wert so lange verändert, wie das Vergleichsergebnis c*-$c_M$ nicht Null ist. Da der von der Einrichtung 12 erzeugte und veränderte Wert für die Stellgröße p* dem Modell 8 zugeführt wird, ändert sich dessen Ausgangswert $c_M$ so lange, bis er denselben Wert wie die Führungsgröße c* aufweist. Wenn dies der Fall ist, wird in Abhängigkeit von dem Vergleichsergebnis c*-$c_M$ = 0 der aktuelle Wert für die Stellgröße p* über eine Schalteinrichtung 13 an das Stellglied 4 (FIG 1) durchgeschaltet.

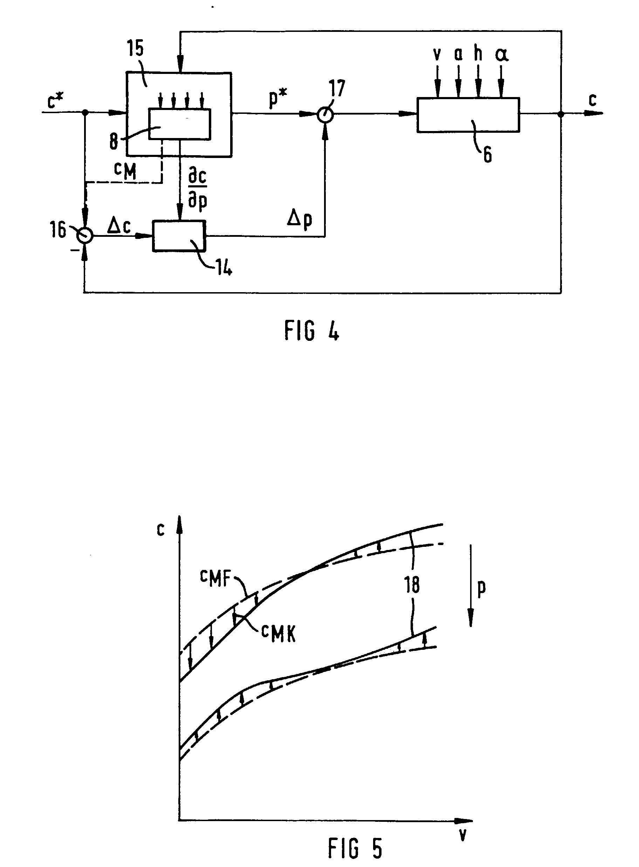

Wie bereits erwähnt, wird mit den in FIG 2 und 3 gezeigten Ausführungsbeispielen der erfindungsgemäßen Vorrichtung bei hinreichend genauer Adaption des Modells 8 an das Prozeßgeschehen eine exakte Führung des Prozesses 6 erreicht, ohne daß eine Regeleinrichtung erforderlich ist. Wenn die Nachbildung des Prozesses 6 durch das Modell 8 als nicht hinreichend genau angesehen wird, kann, wie FIG 4 zeigt, zusätzlich eine Regeleinrichtung 14 vorgesehen werden. In FIG 4 ist mit 15 eine Recheneinrichtung bezeichnet, in der die in den FIG 2 bzw. 3 gezeigten Schaltungsblöcke 7 bis 13 implementiert sind. Der Regeleinrichtung 14 wird eingangsseitig die in einer zusätzlichen Vergleichseinrichtung 16 gebildete Regelabweichung $\Delta$c zwischen der Führungsgröße c* oder, wie durch die gestrichelte Linie angedeutet ist, dem Modellausgangswert $c_M$ und der Ausgangsgröße c des Prozesses zugeführt. Das Ausgangssignal $\Delta$p der Regeleinrichtung 14 wird über ein Additionsglied 17 der Stellgröße p* aufgeschaltet. Die Recheneinrichtung 15 mit dem Modell 8 bildet also eine Vorsteuerung für die Regeleinrichtung 14. Die Regeleinrichtung 14 muß daher nur noch solche Regelfehler ausregeln, die von dem Modell 8 nicht erfaßt werden, so daß die Regeleinrichtung 14 nur in geringem Maße beansprucht wird und dementsprechend einfach ausgebildet sein kann. Um zu erreichen, daß die Regeleinrichtung 14 angepaßt an das reale Prozeßgeschehen immer im optimalen Arbeitspunkt arbeitet, wird die Verstärkung $\partial c/\partial p$ der Regeleinrichtung 14 mittels der Änderungen der von dem Modell 8 verarbeiteten Größen $c_M$ und p* eingestellt.

Im folgenden wird der Aufbau des Modells 8 und der Lernvorgang zur Anpassung des Modells 8 an das Prozeßgeschehen näher erläutert. Um die Darstellung zu vereinfachen, wird nur der Einfluß der Bandgeschwindigkeit v und des Luftdruckes p auf die Zinkschichtdicke c betrachtet.

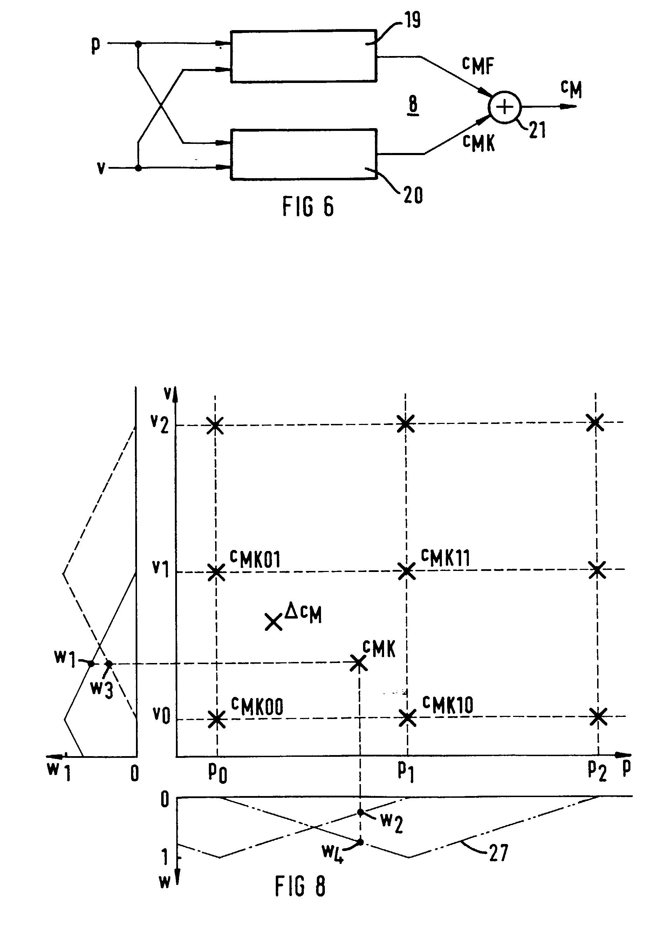

FIG 5 zeigt die nichtlinearen Kennlinien 18 für die Zinkschichtdicke c in Abhängigkeit von der Bandgeschwindigkeit v und dem Luftdruck p. Diese Kennlinien sollen durch das Modell 8 des Prozesses nachgebildet werden. Wie FIG 6 zeigt, besteht das Modell 8 aus einem Grundmodell 19 und einer dazu parallelen Korrektureinrichtung 20, denen jeweils die Eingangsgrößen p und v zugeführt werden. Das Grundmodell 19 berechnet daraus eine Grundkomponente $c_{MF}$ und die Korrektureinrichtung 20 eine Korrekturkomponente $c_{MK}$, die beide in einem Additionsglied 21 zu dem Modellausgangswert $c_M$ verknüpft werden.

Bei der Grundkomponente $c_{MF}$ handelt es sich um eine Funktionsapproximation auf der Grundlage von vorhandenem Wissen über den Prozeß. Dieses Wissen besteht aus Meßdaten, die den Zusammenhang zwischen der Zinkschichtdicke c und den auf sie wirkenden Einflußgrößen p, v, a, h und $\alpha$ beschreiben und durch Messungen an einer ausgewählten Feuerverzinkungsanlage erhalten werden. Aus der graphischen Darstellung der Meßdaten, die dem Verlauf der Kennlinien 18 in FIG 5 entspricht, wird eine mathematische Funktion $c_{MF} = f(p, v, h, \alpha)$ abgeleitet, die den prinzipiellen Verlauf der Kennlinien 18 annähernd wiedergibt. Sind a, h und $\alpha$ konstant, so lassen sich die Kennlinien 18 beispielsweise durch die Funktion

$$c_{MF} = f(p, v) = v/(K1 \cdot v + K2 \cdot p^{3/2} + K3)$$

approximieren, wobei K1, K2 und K3 zu lernende Funktionsparameter sind.

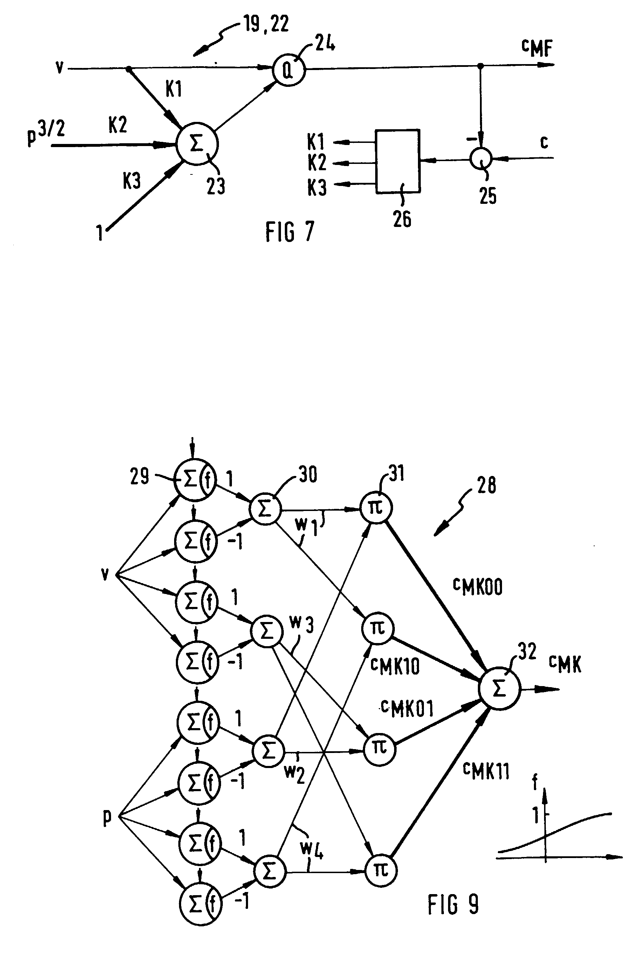

Die so erhaltene mathematische Funktion $c_{MF} = f(p, v)$ wird in Form eines neuronalen Netzwerkes 22 realisiert, das in FIG 7 dargestellt ist. Dem neuronalen Netzwerk 22 werden eingangsseitig die Größen v und $p^{3/2}$ zugeführt und entsprechend der oben angegebenen mathematischen Funktion durch einen Summationsknoten 23 und einen Knoten 24 mit Quotientenfunktion verknüpft. Die Verbindungen der Knoten in dem neuronalen Netzwerk 22 sind jeweils mit einem Faktor versehen. Ist die Verbindung dick gezeichnet, so ist der Faktor lernbar (Netzwerkparameter K1, K2, K3); ansonsten ist der Faktor konstant (hier 1,0). An dem Ausgang des neuronalen Netzwerkes 22 ergibt sich die Grundkomponente $c_{MF}$.

Um die Netzwerkparameter K1, K2 und K3 zu lernen, wird die erzeugte Grundkomponente $c_{MF}$ mit der von dem Prozeß 6 in Abhängigkeit von den gemessenen Größen p und v erzeugten und gemessenen Ausgangsgröße c in einer Vergleichseinrichtung 25 verglichen. In Abhängigkeit von dem Vergleichsergebnis werden in einem Lernalgorithmus 26 die Netzwerkparameter K1, K2 und K3 solange verändert, bis die Angleichung der Grundkomponente $c_{MF}$ an die Ausgangsgröße c des Prozesses 6 nicht weiter verbessert werden kann.

Die von dem so adaptierten Grundmodell 19 erzeugte Grundkomponente $c_{MF}$ ist in FIG 5 gestrichelt dargestellt. Wie zu sehen ist, ergeben sich immer noch Differenzen zwischen der Ausgangsgröße c des Prozesses 6 und der von dem Grundmodell 19 gelieferten Grundkomponente $c_{MF}$. Zum Ausgleich dieser Differenzen dient die Korrekturkomponente $c_{MK}$, deren Berechnung in der Korrektureinrichtung 20 anhand von FIG 8 näher erläutert wird. Zunächst werden in dem von den auf den Prozeß einwirkenden Größen p, v, a, h und $\alpha$ definierten mehrdimensionalen Raum Stützstellen definiert. Zur Vereinfachung werden hier, wie auch schon vorher, nur die Größen p und v betrachtet, wobei die Stützstellen durch die Wertepaare $(p_i, v_j)$ mit i, j = 0,1,2,... definiert werden. Für diese Stützstellen $(p_i, v_j)$ werden nun Korrekturwerte $c_{MKij}$ gelernt, indem die Differenz $\Delta c_M$ zwischen der in Abhängigkeit von den gemessenen Größen p und v von dem Prozeß 6 erzeugten Ausgangsgröße c und der von dem Grundmodell 19 gelieferten Grundkomponente $c_{MF}$ zur Berechnung der stützstellenbezogenen Korrekturwerte $c_{MKij}$ herangezogen wird. Mit anderen Worten werden die stützstellenbezogenen Korrekturwerte $c_{MKij}$ derart aus dem Differenzwert $\Delta c_M$ berechnet, daß sich umgekehrt bei Interpolation der Korrekturwerte $c_{MKij}$ an den Stützstellen $(p_i, v_j)$ der Differenzwert $\Delta c_M$ für die aktuellen Eingangsgrößen p und v ergibt.

Durch Interpolation zwischen den so gelernten stützstellenbezogenen Korrekturwerten $c_{MKij}$ wird schließlich die Korrekturkomponente $c_{MK}$ berechnet. Die Interpolation erfolgt auf der Grundlage von Fuzzy-Folgerungen, wozu jeder Stützstelle $(p_i, v_j)$ jeweils eine Zuordnungs- oder Membership-Funktion 27 zugeordnet ist, die den gelernten Korrekturwert $c_{MKij}$ an der betreffenden Stützstelle und in deren Umgebung mit einem Gewicht w wichtet. Dabei haben die Zuordnungsfunktionen 27 an den zugehörigen Stützstellen $(p_i, v_j)$ den Wert 1, der bis zu den jeweils benachbarten Stützstellen linear auf den Wert 0 abfällt. Die Korrekturkomponente $c_{MK}$ für die Eingangsgrößen p und v berechnet sich aus der Addition aller zu den Eingangsgrößen p und v benachbarten und mit dem jeweiligen Gewicht w multiplizierten stützstellenbezogenen Korrekturwerte $c_{MKij}$ mit

$$c_{MK} = w_1 w_2 c_{MK00} + w_1 w_4 c_{MK10} + w_2 w_3 c_{MK01} + w_3 w_4 c_{MK11}.$$

FIG 9 zeigt ein Beispiel für die Realisierung der oben stehenden Berechnungsvorschrift für die Korrekturkomponente $c_{MK}$ durch ein neuronales Netzwerk 28. Dieses erhält als Eingangsgrößen die Größen v und p, die einer ersten Schicht mit Knoten 29 mit Sigmoid-Funktionen zugeführt werden. Dabei werden die in FIG 8 gezeigten dreieckförmigen Zugehörigkeits-Funktionen 27 durch jeweils zwei der Knoten 29 und nachfolgende Addition der Knotenausgangssignale in jeweils einem Summationsknoten 30 gebildet. An den Ausgängen der Summationsknoten 30 erscheinen daher die Werte $w_1$ bis $w_4$, die die mit den Zugehörigkeitsfunktionen 27 gewichteten Größen p und v bezeichnen. Diese Werte $w_1$ bis $w_4$ werden entsprechend der obigen Rechenvorschrift durch Knoten 31 mit Produktfunktion und einen Summationsknoten 32 am Ausgang des neuronalen Netzwerkes 28 zu der Korrekturkomponente $c_{MK}$ verknüpft. Die Faktoren $c_{MK00}$ bis $c_{MK11}$ an den Eingängen des Summationsknotens 32 sind die zu lernenden Netzwerkparameter des neuronalen Netzwerkes 28.

## Patentansprüche

1. Verfahren zur Führung einer Beschichtungsanlage zur Beschichtung eines Trägermaterials, z.B. Stahlblechen, mit einem Beschichtungsmaterial, z.B. Zink, wobei Beschichtungsmaterial auf den Träger aufgetragen wird, und anschließend entsprechend einer vorgegebenen Sollschichtdicke (c*) durch unter Druck (p) stehende Luft, die gegen den Träger strömt entfernt wird, wobei mittels eines in einer Recheneinrichtung (15) enthaltenen Modells der Beschichtungsanlage (6) in Abhängigkeit von einem dem Modell (8) eingangsseitig zugeführten Solluftdruck (p*) und Einflußgrößen (v, a, h, $\alpha$), von denen

die Istschichtdicke (c) abhängig ist, sowie in Abhängigkeit von veränderbaren Modellparametern (m) ein Modellausgangswert ($c_M$) berechnet wird, wobei der Modellausgangswert ($c_M$) mit der gemessenen Istschichtdicke verglichen und in Abhängigkeit von dem Vergleichsergebnis die Modellparameter (m) im Sinne einer Verringerung der Abweichung zwischen dem Modellausgangswert ($c_M$) und der Istschichtdicke (c) verändert werden und wobei das so an das tatsächliche Prozeßgeschehen adaptierte Modell (8) der Beschichtungsanlage zur Bestimmung des Solluftdrucks (p*) in Abhängigkeit von den Einflußgrößen (v, a, h, $\alpha$), herangezogen wird,

**dadurch gekennzeichnet,**

daß das an das tatsächliche Prozeßgeschehen adaptierte Modell (8) der Beschichtungsanlage zur Bestimmung des Solluftdrucks (p*) in Abhängigkeit von der Sollschichtdicke (c*) herangezogen wird, indem zur Bestimmung des Solluftdruckes (p*) die Sollschichtdicke (c*) mit dem Modellausgangswert ($c_M$) verglichen wird und in Abhängigkeit von dem Vergleichsergebnis ein dem Modell (8) zugeführter Wert für den Solluftdruck (p*) solange verändert wird, bis der Modellausgangswert ($c_M$) der Sollschichtdicke (c*) entspricht und daß der schließlich erhaltene Wert für den Solluftdruck (p*) einem Stellglied (4) zugeführt wird.

2. Verfahren zur Führung einer Beschichtungsanlage zur Beschichtung eines Trägermaterials, z.B. Stahlblechen, mit einem Beschichtungsmaterial, z.B. Zink, wobei Beschichtungsmaterial auf den Träger aufgetragen wird, und anschließend entsprechend einer vorgegebenen Sollschichtdicke (c*) durch unter Druck (p) stehende Luft, die gegen den Träger strömt entfernt wird, wobei mittels eines in einer Recheneinrichtung (15) enthaltenen Modells der Beschichtungsanlage (6) in Abhängigkeit von einem dem Modell (8) eingangsseitig zugeführten Solluftdruck (p*) und Einflußgrößen (v, a, h, $\alpha$), von denen die Istschichtdicke (c) abhängig ist, sowie in Abhängigkeit von veränderbaren Modellparametern (m) ein Modellausgangswert ($c_M$) berechnet wird, wobei der Modellausgangswert ($c_M$) mit der gemessenen Istschichtdicke verglichen und in Abhängigkeit von dem Vergleichsergebnis die Modellparameter (m) im Sinne einer Verringerung der Abweichung zwischen dem Modellausgangswert ($c_M$) und der Istschichtdicke (c) verändert werden und wobei das so an das tatsächliche Prozeßgeschehen adaptierte Modell (8) der Beschichtungsanlage zur Bestimmung des Solluftdrucks (p*) in Abhängigkeit von den Einflußgrößen (v, a, h, $\alpha$), herangezogen wird,

**dadurch gekennzeichnet,**

daß das an das tatsächliche Prozeßgeschehen adaptierte Modell (8) der Beschichtungsanlage zur Bestimmung des Solluftdrucks (p*) in Abhängigkeit von der Sollschichtdicke (c*) herangezogen wird, daß zur Bestimmung des Solluftdruckes (p*) die Sollschichtdicke (c*) und die Einflußgrößen (v, a, h, $\alpha$) eingangsseitig einem inversen Modell (7) der Beschichtungsanlage (6) zugeführt werden, das ausgangsseitig den Solluftdruck (p*) erzeugt, und daß in Abhängigkeit von der Adaption des Modells (8) der Beschichtungsanlage (6) auch das inverse Modell (7) an das Prozeßgeschehen angepaßt wird.

3. Verfahren nach einem der vorangehenden Ansprüche,

**dadurch gekennzeichnet,**

daß die Regelabweichung ($\Delta c$) zwischen dem Modellausgangswert ($c_M$) oder der vorgegebenen Sollschichtdicke (c*) und der gemessenen Istschichtdicke (c) einer Regeleinrichtung (14) zugeführt wird, deren Ausgangssignal ($\Delta p$) der mittels des Modells (8) der Beschichtungsanlage (6) erzeugten Solluftdruck (p*) aufgeschaltet wird.

4. Verfahren nach Anspruch 3,

**dadurch gekennzeichnet,**

daß die Verstärkung der Regeleinrichtung (14) mittels des von dem Modell (8) der Beschichtungsanlage (6) gelieferten Änderungen der von dem Modell (8) verarbeiteten Größen ($c_M.p*$) eingestellt wird.

5. Verfahren nach einem der vorangehenden Ansprüche,

**dadurch gekennzeichnet,**

daß der Modellausgangswert ($c_M$) durch Verknüpfung einer Grundkomponente ($c_{MF}$) und einer Korrekturkomponente ($c_{MK}$) gebildet wird, daß die Grundkomponente ($c_{MF}$) von einem Grundmodell (19) der Beschichtungsanlage (6) erzeugt wird, das aufgrund von vorhandenem Wissen über die Beschichtungsanlage (6) erstellt worden ist und anhand der gemessenen Istschichtdicke (c) an das Prozeßgeschehen adaptiert wird, und daß die Korrekturkomponente ($c_{MK}$) von einer Korrektureinrichtung (20) erzeugt wird, die in Abhängigkeit von nach erfolgter Adaption des Grundmodells (19) noch bestehenden Abweichungen zwischen dem Modellausgangswert ($c_M$) und der Istschichtdicke (c) adaptiv an das Prozeßgeschehen angepaßt wird.

6. Verfahren nach Anspruch 5,

**dadurch gekennzeichnet,**

daß zur Erstellung des Grundmodells (19) der Beschichtungsanlage (6) aufgrund des vorhandenen Wissens über die Beschichtungsanlage (6) eine mathematische Funktion erstellt wird, die die Abhängigkeit der Istschichtdicke (c) von dem Solluftdruck (p*), den Einflußgrößen (v, a, h, $\alpha$) und von Funktionsparametern (K1, K2, K3) wiedergibt, und daß die so erhaltene Funktion als neuronales Netzwerk (20) realisiert wird, dem eingangsseitig der Solluftdruck (p*) und die Einflußgrößen (v, a, h, $\alpha$) zugeführt werden und dessen den Funktionsparametern entsprechende Netzwerkparameter (K1, K2, K3) adaptiv an das Prozeßgeschehen angepaßt werden.

7. Verfahren nach Anspruch 5 oder 6,
**dadurch gekennzeichnet,**
daß die Korrektureinrichtung (20) für vorgegebene Stützstellen ($p_i$, $v_j$) in dem von dem Solluftdruck (p*) und den Einflußgrößen (v, a, h, $\alpha$) definierten mehrdimensionalen Raum stützstellenbezogene Korrekturwerte ($c_{MKij}$) bereitstellt, daß die stützstellenbezogenen Korrekturwerte ($c_{MKij}$) derart aus Abweichungen zwischen dem Modellausgangswert ($c_M$) und der zusammen mit zwischen den Stützpunkten ($p_i$, $v_j$) liegenden Werten dem Solluftdruck (p*) und der Einflußgrößen (v, a, h, $\alpha$) gemessenen Istschichtdicke (c) der Beschichtungsanlage (6) berechnet wird, daß sich bei Interpolation der stützstellenbezogenen Korrekturwerte ($c_{MKij}$) die jeweils gemessene Abweichung ($\Delta c_M$) wieder ergibt, und daß die Korrekturkomponente ($c_{MK}$) durch Interpolation zwischen denjenigen stützstellenbezogenen Korrekturwerten ($c_{MKij}$) berechnet wird, deren Stützstellen ($p_i$, $v_j$) den Werten für der zu der Korrekturkomponente ($c_{MK}$) gehörende Solluftdruck (p*) und die Einflußgrößen (v, a, h, $\alpha$) benachbart sind.

8. Verfahren nach Anspruch 7,
**dadurch gekennzeichnet,**
daß die Interpolation zur Berechnung der Korrekturkomponente ($c_{MK}$) auf der Grundlage von Fuzzy-Folgerungen erfolgt, indem jeder Stützstelle ($p_i$, $v_j$) eine Zuordnungs-(Membership-)Funktion (27) zugeordnet wird, die an der betreffenden Stützstelle ($p_i$, $v_j$) den Wert Eins aufweist und bis zu den nächsten benachbarten Stützstellen auf den Wert Null abfällt, und indem die stützstellenbezogenen Korrekturwerte ($c_{MKij}$) mit den zugehörigen Zuordnungsfunktionen (27) gewichtet und einander überlagert werden.

9. Verfahren nach einem der Ansprüche 5 bis 8,
**dadurch gekennzeichnet,**
daß die Korrekturkomponente ($c_{MK}$) in einem die Korrektureinrichtung (20) bildenden neuronalen Netzwerk (28) berechnet wird.

10. Verfahren nach einem der vorangehenden Ansprüche,
**dadurch gekennzeichnet,**
daß in der Beschichtungsanlage (6) die Istschichtdicke (c) von Zink auf einem ein Bad (2) mit flüssigem Zink durchlaufenden Band (1) geregelt wird, indem aus einer Düse (3) Luft gegen das aus dem Zinkbad (2) austretende Band (1) geblasen wird, wobei der Luftdruck (p), die Bandgeschwindigkeit (v) sowie die geometrische Anordnung der Düse (3) in bezug auf das Band (1) die auf die Beschichtungsanlage (6) einwirkenden Einflußgrößen sind.

11. Vorrichtung zur Führung einer Beschichtungsanlage zur Beschichtung eines Trägermaterials, z.B. Stahlblechen, mit einem Beschichtungsmaterial, z. B. Zink, wobei Beschichtungsmaterial auf den Träger aufgetragen wird, und anschließend entsprechend einer vorgegebenen Sollschichtdicke (c*) durch unter Druck (p) stehende Luft, die gegen den Träger strömt entfernt wird, wobei die Vorrichtung eine Recheneinrichtung (15) aufweist, auf der ein Modell der Beschichtungsanlage (6) implementiert ist und die in Abhängigkeit von einem dem Modell (8) eingangsseitig zugeführten Solluftdruck (p*) und Einflußgrößen (v, a, h, $\alpha$), von denen die Istschichtdicke (c) abhängig ist, sowie in Abhängigkeit von veränderbaren Modellparametern (m) ein Modellausgangswert ($c_M$) berechnend ausgebildet ist, wobei sie den Modellausgangswert ($c_M$) mit der gemessenen Istschichtdicke vergleichend und in Abhängigkeit von dem Vergleichsergebnis die Modellparameter (m) im Sinne einer Verringerung der Abweichung zwischen dem Modellausgangswert ($c_M$) und der Istschichtdicke (c) verändernd ausgebildet ist und wobei das so an das tatsächliche Prozeßgeschehen adaptierte Modell (8) der Beschichtungsanlage zur Bestimmung des Solluftdrucks (p*) in Abhängigkeit von den Einflußgrößen (v, a, h, $\alpha$), herangezogen wird,
**dadurch gekennzeichnet,**
daß die Vorrichtung zur Führung der Beschichtungsanlage das an das tatsächliche Prozeßgeschehen adaptierte Modell (8) der Beschichtungsanlage zur Bestimmung des Solluftdrucks (p*) in Abhängigkeit von der Sollschichtdicke (c*) heranzieht, in dem sie zur Bestimmung des Solluftdruckkes (p*) die Sollschichtdicke (c*) mit dem Modellausgangswert ($c_M$) vergleicht und in Abhängigkeit von dem Vergleichsergebnis einen dem Modell (8) zugeführten Wert für den Solluftdruck (p*) solange verändert, bis der Modellausgangswert ($c_M$) der Sollschichtdicke (c*) entspricht und daß sie den schließlich erhaltenen Wert für den Solluftdruck (p*) einem Stellglied (4) zuführt.

12. Vorrichtung zur Führung einer Beschichtungsanlage zur Beschichtung eines Trägermaterials, z.B. Stahlblechen, mit einem Beschichtungsmaterial, z. B. Zink, wobei Beschichtungsmaterial auf den Träger aufgetragen wird, und anschließend entsprechend einer vorgegebenen Sollschichtdicke (c*) durch unter Druck (p) stehende Luft, die gegen den Träger strömt entfernt wird, wobei die Vorrichtung eine Recheneinrichtung (15) aufweist, auf der ein Modell der Beschichtungsanlage (6) implementiert ist und die in Abhängigkeit von einem dem Modell (8) eingangsseitig zugeführten Solluftdruck (p*) und Einflußgrößen (v, a, h, $\alpha$), von denen die Istschichtdicke (c) abhängig ist, sowie in Abhängigkeit von veränderbaren Modellparametern (m) ein Modellausgangswert ($c_M$) berechnend ausgebildet ist, wobei sie den Modellausgangswert ($c_M$) mit der gemessenen Istschichtdicke vergleichend und in Abhängigkeit von dem Vergleichsergebnis die Modellparameter (m) im Sinne einer Verringerung der Abweichung zwischen dem Modellausgangswert ($c_M$) und der Istschichtdicke (c) verändernd ausgebildet ist und wobei das so an das tatsächliche Prozeßgeschehen adaptierte Modell (8) der Beschichtungsanlage zur Bestimmung des Sollluftdrucks (p*) in Abhängigkeit von den Einflußgrößen (v, a, h, $\alpha$), herangezogen wird,

**dadurch gekennzeichnet,**

daß die Vorrichtung zur Führung der Beschichtungsanlage das an das tatsächliche Prozeßgeschehen adaptierte Modell (8) der Beschichtungsanlage zur Bestimmung des Solluftdrucks (p*) in Abhängigkeit von der Sollchichtdicke (c*) heranzieht und daß sie zur Bestimmung des Solluftdrukkes (p*) die Sollschichtdicke (c*) und die Einflußgrößen (v, a, h, $\alpha$) eingangsseitig einem inversen Modell (7) der Beschichtungsanlage (6) zuführt, das ausgangsseitig den Solluftdruck (p*) erzeugt, und daß in Abhängigkeit von der Adaption des Modells (8) der Beschichtungsanlage (6) auch das inverse Modell (7) an das Prozeßgeschehen angepaßt wird.

## Claims

1.  Method to control a coating system to coat a carrier material, for example steel plates, with a coating material, for example zinc, whereby coating material is applied to the carrier and is subsequently removed according to a specified desired layer thickness (c*) by means of air under pressure (p) which flows against the carrier, whereby by means of a model of the coating system (6) contained in a computing device (15), in dependence upon a desired air pressure (p*) supplied to the model (8) on the input side and upon influencing variables (v, a, h, $\alpha$), on which the actual layer thickness (c) depends, and in dependence upon variable model parameters (m), a model output value ($c_M$) is calculated, whereby the model output value ($c_M$) is compared with the measured actual layer thickness and, in dependence upon the comparison result, the model parameters (m) are changed in the sense of a reduction of the difference between the model output value ($c_M$) and the actual layer thickness (c), and whereby the model (8) of the coating system adjusted in this way to the actual process events is used to determine the desired air pressure (p*) in dependence upon the influencing variables (v, a, h, $\alpha$), characterized in that the model (8) of the coating system adjusted to the actual process events is used to determine the desired air pressure (p*) in dependence upon the desired layer thickness (c*), in that to determine the desired air pressure (p*) the desired layer thickness (c*) is compared with the model output value ($c_M$) and, in dependence upon the comparison result, a value supplied to the model (8) for the desired air pressure (p*) is changed until the model output value ($c_M$) corresponds to the desired layer thickness (c*) and in that the value finally obtained for the desired air pressure (p*) is supplied to an actuator (4).

2.  Method to control a coating system to coat a carrier material, for example steel plates, with a coating material, for example zinc, whereby coating material is applied to the carrier and is subsequently removed according to a specified desired layer thickness (c*) by means of air under pressure (p) which flows against the carrier, whereby by means of a model of the coating system (6) contained in a computing device (15), in dependence upon a desired air pressure (p*) supplied to the model (8) on the input side and upon influencing variables (v, a, h, $\alpha$), on which the actual layer thickness (c) depends, and in dependence upon variable model parameters (m), a model output value ($c_M$) is calculated, whereby the model output value ($c_M$) is compared with the measured actual layer thickness and, in dependence upon the comparison result, the model parameters (m) are changed in the sense of a reduction of the difference between the model output value ($c_M$) and the actual layer thickness (c), and whereby the model (8) of the coating system adjusted in this way to the actual process events is used to determine the desired air pressure (p*) in dependence upon the influencing variables (v, a, h, $\alpha$), characterized in that the model (8) of the coating system adjusted to the actual process events is used to determine the desired air pressure (p*) in dependence upon the desired layer thickness (c*), in that to determine the desired air pressure (p*) the desired layer thickness (c*) and the influencing variables (v, a, h, $\alpha$) are supplied on the input side to an inverse model (7) of the coating system (6), which generates the desired air pressure (p*) on the output side, and in that in dependence upon the adjustment of the model (8) of the coating system (6) the inverse model (7) is also adjusted to the process events.

3.  Method according to one of the preceding claims, characterized in that the system deviation ($\Delta c$) between the model output value ($c_M$) or the specified desired layer thickness (c*) and the measured actual layer thickness (c) is supplied to a regulating device (14), the output signal (Δp) of which is applied to the desired air pressure (p*) generated by means of the model (8) of the coating system (6).

4. Method according to claim 3, characterized in that the amplification of the regulating device (14) is adjusted by means of the changes of the variables ($c_M$, p*) processed by the model (8), which changes are supplied by the model (8) of the coating system (6).

5. Method according to one of the preceding claims, characterized in that the model output value ($c_M$) is formed by linking a base component ($c_{MF}$) and a correction component ($c_{MK}$), in that the base component ($c_{MF}$) is generated by a basic model (19) of the coating system (6), which basic model has been created on the basis of existing knowledge of the coating system (6) and is adjusted to the process events with the aid of the measured actual layer thickness (c), and in that the correction component ($c_{MK}$) is generated by a correction device (20) which, in dependence upon differences between the model output value ($c_M$) and the actual layer thickness (c) which still exist after the adjustment of the basic model (19) has taken place, is adaptively adjusted to the process events.

6. Method according to claim 5, characterized in that to create the basic model (19) of the coating system (6), on the basis of existing knowledge of the coating system (6) a mathematical function is created which reproduces the dependence of the actual layer thickness (c) on the desired air pressure (p*), the influencing variables (v, a, h, α) and on function parameters (K1, K2, K3), and in that the function obtained in this way is realized as a neuronal network (20), to which on the input side the desired air pressure (p*) and the influencing variables (v, a, h, α) are supplied, and the network parameters (K1, K2, K3) of which, corresponding to the function parameters, are adaptively adjusted to the process events.

7. Method according to claim 5 or 6, characterized in that the correction device (20) for specified supporting points ($p_i$, $v_j$) prepares supporting-point-related correction values ($c_{MKij}$) in the multi-dimensional area defined by the desired air pressure (p*) and the influencing variables (v, a, h, α), in that the supporting-point-related correction values ($c_{MKij}$) are calculated from differences between the model output value ($c_M$) and the actual layer thickness (c) of the coating system (6) measured together with values of the desired air pressure (p*) and the influencing variables (v, a, h, α) lying between the supporting points ($p_i$, $v_j$), in that upon interpolation of the supporting-point-related correction values ($c_{MKij}$) the respectively measured difference ($Δc_M$) again results, and in that the correction component ($c_{MK}$) is calculated by means of interpolation between those supporting-point-related correction values ($c_{MKij}$), the supporting points ($p_i$, $v_j$) of which are adjacent to the values for the desired air pressure (p*) belonging to the correction component ($c_{MK}$) and the influencing variables (v, a, h, α).

8. Method according to claim 7, characterized in that the interpolation to calculate the correction component ($c_{MK}$) takes place on the basis of fuzzy conclusions, in that each supporting point ($p_i$, $v_j$) is allocated an allocation (membership) function (27) which at the relevant supporting point ($p_i$, $v_j$) has the value one and falls up to the next adjacent supporting points to the value zero, and in that the supporting-point-related correction values ($c_{MKij}$) are weighted with the associated allocation functions (27) and are superimposed, one on the other.

9. Method according to one of claims 5 to 8, characterized in that the correction component ($c_{MK}$) is calculated in a neuronal network (28) which forms the correction device (20).

10. Method according to one of the preceding claims, characterized in that in the coating system (6) the actual layer thickness (c) of zinc on a strip (1) which passes through a bath (2) of liquid zinc is regulated, in that air is blown from a nozzle (3) against the strip (1) when it leaves the zinc bath (2), whereby the air pressure (p), the strip speed (v) and the geometric arrangement of the nozzle (3) with respect to the strip (1) are the influencing variables which act on the coating system (6).

11. Device to control a coating system to coat a carrier material, for example steel plates, with a coating material, for example zinc, whereby coating material is applied to the carrier, and is subsequently removed according to a specified desired layer thickness (c*) by means of air under pressure (p) which flows against the carrier, whereby the device has a computing device (15) on which a model of the coating system (6) is implemented and which, in dependence upon a desired air pressure (p*) supplied to the model (8) on the input side and upon influencing variables (v, a, h, α), on which the actual layer thickness (c) depends, and in dependence upon variable model parameters (m), is constructed to calculate a model output value ($c_M$), whereby it is constructed to compare the model output value ($c_M$) with the measured actual layer thickness and, in dependence upon the comparison result, to change the model parameters (m) in the sense of a reduction of the difference between the model output value ($c_M$) and the actual layer thickness (c) and whereby the model (8) of the coating system adjusted in this way to the actual process events is used to determine the desired air pressure (p*) in dependence upon the influencing variables (v, a, h, $\alpha$), characterized in that the device to control the coating system uses the model (8) of the coating system adjusted to the actual process events to determine the desired air pressure (p*) in dependence upon the desired layer thickness (c*), in that to determine the desired air pressure (p*) it compares the desired layer thickness (c*) with the model output value ($c_M$) and, in dependence upon the comparison result, changes a value for the desired air pressure (p*) supplied to the model (8) until the model output value ($c_M$) corresponds to the desired layer thickness (c*) and in that it supplies the finally obtained value for the desired air pressure (p*) to an actuator (4).

12. Device to control a coating system to coat a carrier material, for example steel plates, with a coating material, for example zinc, whereby coating material is applied to the carrier and is subsequently removed according to a specified desired layer thickness (c*) by means of air under pressure (p) which flows against the carrier, whereby the device has a computing device (15) on which a model of the coating system (6) is implemented and which, in dependence upon a desired air pressure (p*) supplied to the model (8) on the input side and upon influencing variables (v, a, h, $\alpha$), on which the actual layer thickness (c) depends, and in dependence upon variable model parameters (m), is constructed to calculate a model output value ($c_M$), whereby it is constructed to compare the model output value ($c_M$) with the measured actual layer thickness 5 and, in dependence upon the comparison result, to change the model parameters (m) in the sense of a reduction of the difference between the model output value ($c_M$) and the actual layer thickness (c), and whereby the model (8) of the coating system adjusted in this way to the actual process events is used to determine the desired air pressure (p*) in dependence upon the influencing variables (v, a, h, $\alpha$), characterized in that the device to control the coating system uses the model (8) of the coating system adjusted to the actual process events to determine the desired air pressure (p*) in dependence upon the desired layer thickness (c*), and in that to determine the desired air pressure (p*) it supplies the desired layer thickness (c*) and the influencing variables (v, a, h, $\alpha$) on the input side to an inverse model (7) of the coating system (6), which generates the desired air pressure (p*) on the output side, and in that in dependence upon the adjustment of the model (8) of the coating system (6) the inverse model (7) is also adjusted to the process events.

**Revendications**

1. Procédé pour la commande d'une installation de revêtement pour couvrir un matériau formant support, par exemple des tôles d'acier, d'un matériau de revêtement, par exemple du zinc, selon lequel on applique du matériau de revêtement sur le support et on l'élimine ensuite en fonction d'une épaisseur de couche de consigne prédéterminée (c*) au moyen d'air soumis à une pression (p) et s'écoulant sur le support, selon lequel on calcule une valeur de sortie de modèle ($c_M$) au moyen d'un modèle de l'installation de revêtement (6) contenu dans une unité de calcul (15) en fonction d'une pression d'air de consigne (p*) et de grandeurs d'influence (v, a, h, $\alpha$), envoyées en entrée au modèle (8) et dont dépend l'épaisseur de couche réelle (c), et en fonction de paramètres de modèle (m) variables, selon lequel on compare la valeur de sortie de modèle ($c_M$) à l'épaisseur de couche réelle mesurée et on modifie en fonction du résultat de comparaison les paramètres de modèle (m) en vue d'une diminution de l'écart entre la valeur de sortie de modèle ($c_M$) et l'épaisseur de couche réelle (c), et selon lequel on exploite le modèle (8) de l'installation de revêtement, modèle ainsi adapté au déroulement réel du processus, pour déterminer la pression d'air de consigne (p*) en fonction des grandeurs d'influence (v, a, h, $\alpha$),

    caractérisé par le fait que

    on exploite le modèle (8) de l'installation de revêtement adapté au déroulement réel du processus pour déterminer la pression d'air de consigne (p*) en fonction de l'épaisseur de couche de consigne (c*) en comparant pour déterminer la pression d'air de consigne (p*) l'épaisseur de couche de consigne (c*) à la valeur de sortie de modèle ($c_M$) et en modifiant en fonction du résultat de comparaison une valeur, envoyée au modèle (8), pour la pression d'air de consigne (p*) jusqu'à ce que la valeur de sortie de modèle ($c_M$) corresponde à l'épaisseur de couche de consigne (c*), et on envoie la valeur finalement obtenue pour la pression d'air de consigne (p*) à un élément de réglage (4).

2. Procédé pour la commande d'une installation de revêtement pour couvrir un matériau formant support, par exemple des tôles d'acier, d'un matériau de revêtement, par exemple du zinc, selon lequel on applique du matériau de revêtement sur le support et on l'élimine ensuite en fonction d'une épaisseur de couche de consigne prédéterminée (c*) au moyen d'air soumis à une pression (p) et s'écoulant sur le support, selon lequel on calcule une valeur de sortie de modèle ($c_M$) au moyen d'un modèle de l'installation de revêtement (6) contenu dans une unité de calcul (15) en fonction d'une pression d'air de consigne (p*) et de grandeurs d'influence (v, a, h, $\alpha$),

envoyées en entrée au modèle (8) et dont dépend l'épaisseur de couche réelle (c), et en fonction de paramètres de modèle (m) variables, selon lequel on compare la valeur de sortie de modèle ($c_M$) à l'épaisseur de couche réelle mesurée et on modifie en fonction du résultat de comparaison les paramètres de modèle (m) en vue d'une diminution de l'écart entre la valeur de sortie de modèle ($c_M$) et l'épaisseur de couche réelle (c), et selon lequel on exploite le modèle (8) de l'installation de revêtement, modèle ainsi adapté au déroulement réel du processus, pour déterminer la pression d'air de consigne (p*) en fonction des grandeurs d'influence (v, a, h, $\alpha$),

caractérisé par le fait que

on exploite le modèle (8) de l'installation de revêtement adapté au déroulement réel du processus pour déterminer la pression d'air de consigne (p*) en fonction de l'épaisseur de couche de consigne (c*), on envoie pour déterminer la pression d'air de consigne (p*) l'épaisseur de couche de consigne (c*) et les grandeurs d'influence (v, a, h, $\alpha$) en entrée à un modèle inverse (7) de l'installation de revêtement (6), modèle inverse qui produit en sortie la pression d'air de consigne (p*), et on adapte aussi le modèle inverse (7) au déroulement réel du processus en fonction de l'adaptation du modèle (8) de l'installation de revêtement (6).

3. Procédé selon l'une des revendications précédentes,

caractérisé par le fait que

on envoie l'écart de réglage ($\Delta c$) entre la valeur de sortie de modèle ($c_M$) ou l'épaisseur de couche de consigne (c*) prédéterminée et l'épaisseur de couche réelle (c) mesurée à un dispositif de réglage (14) dont le signal de sortie ($\Delta p$) est appliqué sur la pression d'air de consigne (p*) produite au moyen du modèle (8) de l'installation de revêtement (6).

4. Procédé selon la revendication 3,

caractérisé par le fait que

on règle l'amplification du dispositif de réglage (14) au moyen des modifications, fournies par le modèle (8) de l'installation de revêtement (6), des grandeurs ($c_M$, p*) traitées par le modèle (8).

5. Procédé selon l'une des revendications précédentes,

caractérisé par le fait que

on forme la valeur de sortie de modèle ($c_M$) par une combinaison d'une composante fondamentale ($c_{MF}$) et d'une composante correctrice ($c_{MK}$), on produit la composante fondamentale ($c_{MF}$) au moyen d'un modèle fondamental (19) de l'installation de revêtement (6) que l'on élabore sur la base de connaissances existantes concernant l'installation de revêtement (6) et que l'on adapte au déroulement du processus à l'aide de l'épaisseur de couche réelle (c) mesurée, et on produit la composante correctrice ($c_{MK}$) au moyen d'un dispositif correcteur (20) que l'on adapte au déroulement du processus en fonction des écarts, encore existant après l'adaptation faite du modèle fondamental (19), entre la valeur de sortie de modèle ($c_M$) et l'épaisseur de couche réelle (c).

6. Procédé selon la revendication 5,

caractérisé par le fait que

pour élaborer le modèle fondamental (19) de l'installation de revêtement (6), on élabore sur la base des connaissances existantes concernant l'installation de revêtement (6) une fonction mathématique qui traduit la dépendance de l'épaisseur de couche réelle (c) vis-à-vis de la pression d'air de consigne (p*), des grandeurs d'influence (v, a, h, $\alpha$) et de paramètres de fonction (K1, K2, K3), et on met en oeuvre la fonction ainsi obtenue sous la forme d'un réseau neuronal (20) auquel on envoie en entrée la pression d'air de consigne (p*) et les grandeurs d'influence (v, a, h, $\alpha$) et dont on adapte au déroulement du processus les paramètres de réseau (K1, K2, K3) correspondant aux paramètres de fonction.

7. Procédé selon la revendication 5 ou 6,

caractérisé par le fait que

on prépare des valeurs correctrices ($c_{MKij}$) rapportées aux points de reprise, au moyen du dispositif correcteur (20), pour des points de reprise prédéterminés ($p_i$, $v_j$) dans l'espace pluridimensionnel défini par la pression d'air de consigne (p*) et par les grandeurs d'influence (v, a, h, $\alpha$), on calcule les valeurs correctrices ($c_{MKij}$) rapportées aux points de reprise, à partir des écarts entre la valeur de sortie de modèle ($c_M$) et l'épaisseur de couche réelle (c) mesurée dans l'installation de revêtement (6) conjointement à des valeurs, se trouvant entre les points de reprise ($p_i$, $v_j$), de la pression d'air de consigne (p*) et des grandeurs d'influence (v, a, h, $\alpha$), de telle sorte que l'on obtient de nouveau par l'interpolation des valeurs correctrices ($c_{MKij}$) rapportées aux points de reprise l'écart ($\Delta c_M$) respectivement mesuré, et on calcule la composante correctrice ($c_{MK}$) par l'interpolation entre celles des valeurs correctrices ($c_{MKij}$) rapportées aux points de reprise dont les points de reprise ($p_i$, $v_j$) sont voisins des valeurs pour la pression d'air de consigne (p*) appartenant à la composante correctrice ($c_{MK}$) et pour les grandeurs d'influence (v, a, h, $\alpha$).

8. Procédé selon la revendication 7,

caractérisé par le fait que

on effectue l'interpolation pour le calcul de la composante correctrice ($c_{MK}$) sur la base de déductions en logique floue en associant à chaque point de reprise $(p_i, v_j)$ une fonction d'appartenance (Membership) (27) qui présente la valeur Un au point de reprise $(p_i, v_j)$ considéré et qui chute à Zéro jusqu'aux prochains points de reprise voisins, en pondérant les valeurs correctrices $(c_{MKij})$ rapportées aux points de reprise avec les fonctions d'appartenance (27) associées et en les superposant les unes aux autres.

9. Procédé selon l'une des revendications 5 à 8,
   caractérisé par le fait que
   on calcule la composante correctrice $(c_{MK})$ dans un réseau neuronal (28) formant le dispositif correcteur (20).

10. Procédé selon l'une des revendications précédentes,
    caractérisé par le fait que
    dans l'installation de revêtement (6), on règle l'épaisseur de couche réelle (c) de zinc sur une bande (1) traversant un bain (2) de zinc en fusion, en soufflant depuis une buse (3) de l'air sur la bande (1) sortant du bain de zinc (2), la pression d'air (p), la vitesse de bande (v) ainsi que la disposition géométrique de la buse (3) par rapport à la bande (1) étant les grandeurs d'influence agissant sur l'installation de revêtement (6).

11. Dispositif pour la commande d'une installation de revêtement pour couvrir un matériau formant support, par exemple des tôles d'acier, d'un matériau de revêtement, par exemple du zinc, selon lequel du matériau de revêtement est appliqué sur le support et est ensuite éliminé en fonction d'une épaisseur de couche de consigne prédéterminée (c*) au moyen d'air soumis à une pression (p) et s'écoulant sur le support, selon lequel le dispositif comporte une unité de calcul (15) dans laquelle est mis en oeuvre un modèle de l'installation de revêtement (6) et qui forme par le calcul une valeur de sortie de modèle $(c_M)$ en fonction d'une pression d'air de consigne (p*) et de grandeurs d'influence $(v, a, h, \alpha)$, envoyées en entrée au modèle (8) et dont dépend l'épaisseur de couche réelle (c), et en fonction de paramètres de modèle (m) variables, selon lequel il compare la valeur de sortie de modèle $(c_M)$ à l'épaisseur de couche réelle mesurée et il modifie en fonction du résultat de comparaison les paramètres de modèle (m) en vue d'une diminution de l'écart entre la valeur de sortie de modèle $(c_M)$ et l'épaisseur de couche réelle (c), et selon lequel le modèle (8) de l'installation de revêtement ainsi adapté au déroulement réel du processus est exploité pour déterminer la pression d'air de consigne (p*) en fonction des grandeurs d'influence $(v, a, h, \alpha)$,
    caractérisé par le fait que

le dispositif pour la commande de l'installation de revêtement exploite le modèle (8) de l'installation de revêtement adapté au déroulement réel du processus pour déterminer la pression d'air de consigne (p*) en fonction de l'épaisseur de couche de consigne (c*) en comparant pour déterminer la pression d'air de consigne (p*) l'épaisseur de couche de consigne (c*) à la valeur de sortie de modèle $(c_M)$ et en modifiant en fonction du résultat de comparaison une valeur, envoyée au modèle (8), pour la pression d'air de consigne (p*) jusqu'à ce que la valeur de sortie de modèle $(c_M)$ corresponde à l'épaisseur de couche de consigne (c*), et il envoie la valeur finalement obtenue pour la pression d'air de consigne (p*) à un élément de réglage (4).

12. Dispositif pour la commande d'une installation de revêtement pour couvrir un matériau formant support, par exemple des tôles d'acier, d'un matériau de revêtement, par exemple du zinc, selon lequel du matériau de revêtement est appliqué sur le support et est ensuite éliminé en fonction d'une épaisseur de couche de consigne prédéterminée (c*) au moyen d'air soumis à une pression (p) et s'écoulant sur le support, selon lequel le dispositif comporte une unité de calcul (15) dans laquelle est mis en oeuvre un modèle de l'installation de revêtement (6) et qui forme par le calcul une valeur de sortie de modèle $(c_M)$ en fonction d'une pression d'air de consigne (p*) et de grandeurs d'influence $(v, a, h, \alpha)$, envoyées en entrée au modèle (8) et dont dépend l'épaisseur de couche réelle (c), et en fonction de paramètres de modèle (m) variables, selon lequel il compare la valeur de sortie de modèle $(c_M)$ à l'épaisseur de couche réelle mesurée et il modifie en fonction du résultat de comparaison les paramètres de modèle (m) en vue d'une diminution de l'écart entre la valeur de sortie de modèle $(c_M)$ et l'épaisseur de couche réelle (c), et selon lequel le modèle (8) de l'installation de revêtement ainsi adapté au déroulement réel du processus est exploité pour déterminer la pression d'air de consigne (p*) en fonction des grandeurs d'influence $(v, a, h, \alpha)$,
    caractérisé par le fait que
    le dispositif pour la commande de l'installation de revêtement exploite le modèle (8) de l'installation de revêtement adapté au déroulement réel du processus pour déterminer la pression d'air de consigne (p*) en fonction de l'épaisseur de couche de consigne (c*), et il envoie pour déterminer la pression d'air de consigne (p*) l'épaisseur de couche de consigne (c*) et les grandeurs d'influence $(v, a, h, \alpha)$ en entrée à un modèle inverse (7) de l'installation de revêtement (6), modèle inverse qui produit en sortie la pression d'air de consigne (p*) et le modèle inverse (7) est aussi adapté au déroulement du processus en fonction de l'adaptation du modèle (8) de l'installation de revêtement (6).

FIG 1

FIG 2

FIG 3

FIG 4

FIG 5

FIG 6

FIG 8

FIG 7

FIG 9